# EUROPÄISCHE PATENTSCHRIFT

(11) **EP 2 172 121 B1**
(45) Veröffentlichungstag und Bekanntmachung des Hinweises auf die Patenterteilung: **25.01.2012**
(21) Anmeldenummer: 09171809.8
(22) Anmeldetag: 30.09.2009
(51) Int. Cl.: A44B 6/00, A44B 15/00, F16B 2/04, F16D 27/00

(54) **Clip**
Clip
Clip

(30) Priorität: 01.10.2008 DE 202008013080 U
(43) Veröffentlichungstag der Anmeldung: 07.04.2010
(73) Patentinhaber: Rheinmagnet Horst Baermann GmbH, 53819 Neunkirchen-Seelscheid (DE)
(72) Erfinder: Baermann, Eckhard, 51429, Bergisch Gladbach (DE)
(74) Vertreter: Stachow, Ernst-Walther

(56) Entgegenhaltungen:
- DE-U1-202004 002 725
- US-A1- 2006 032 026
- US-B1- 6 848 288

## Beschreibung

Die Erfindung betrifft einen Clip mit jeweils einen Haltebereich aufweisenden Halteelementen, wobei die Halteelemente zur Lagefixierung eines Gegenstandes mit dem Haltebereich unter form- und/oder kraftschlüssigen Anlage an demselben in einer Halteposition relativ zueinander bewegbar sind, und mit einer Magnetanordnung, mittels derer eine auf die Halteelemente wirkende magnetische Federkraft zum Festhalten und/oder Festklemmen des Gegenstandes erzeugbar ist.

Derartige Clipse sind vielfach bekannt. Beispielsweise ist der in der US 2006/0032026A1 ein als Schlipshalter konzipiert gattungsgemäßer Clip offenbart. Dieser weist zwei einzeln bewegbare Halteelemente, einen Dauermagneten und eine magnetisch anziehbare Platte auf, die zum Niederhalten des Schlips unter Einschließung eines Hemdabschnittes und eines Schlipsabschnittes magnetisch aneinander festlegbar sind.

In der DE 20 2004 002 725 U1 wird ein als Schlüsselanhänger ausgebildeter Clip mit mindestens einem Schlüsselaufnahmeelement offenbart, das, in ein Gehäuse eingeführt, in demselben magnetisch halterbar ist.

In der US 6 6 848 288 B1 wird ebenfalls ein Schlüsselanhänger mit einem in ein Gehäuse einschiebbaren Schaft mit Schlüsselring beschrieben.

Der Erfindung liegt die Aufgabe zugrunde, einen Clip der eingangs genannten Art mit einem genauer definierten Federkraft bereitzustellen. Ferner soll der Clip einfacher handhabbar sein.

Die gestellte Aufgabe wird erfindungsgemäß durch die Merkmale des Anspruches 1 gelöst. Vorteilhafte Weiterbildungen des Clips werden in den nachfolgenden Unteransprüchen beschrieben. Insbesondere wird die Aufgabe dadurch gelöst, dass die Halteelemente eine im Wesentlichen einfach bogenartige oder mehrfach bogenartige Form aufweisen, wobei die Bögen der Halteelemente in Einbaulage derselben in dem Clip zueinander geöffnet angeordnet sind und die Halteelemente über einen kreisförmigen Weg relativ zueinander bewegbar in dem Clip angeordnet sind.

Mittels dieser besonderen Ausbildung und Anordnung der Halteelemente sowie deren Bewegung über einen kreisförmigen Weg relativ zueinander kann die Handhabung des Clips vereinfacht werden, da beispielsweise eine zu leistende freie Bewegung gegeneinander oder ein umständliches Einführen des Gegenstandes in ein Gehäuse entfällt. Damit kann leichter und verlässlich die erforderliche Federkraft zur funktionsgerechten form- und/oder kraftschlüssigen Lagefixierung des Gegenstandes, wie Festklemmen, Festhalten, Festklemmen, Einklemmen, Umgreifen, Umschließen oder Eingreifen in eine Öffnung oder Nut des Gegenstandes, erzeugt werden.

Die Halteelemente können einen kreisförmigen Querschnitt aufweisen. Die bogenartige Form kann ein Teilkreisbogen sein. Die Teilkreisbögen der Halteelemente können in Einbaulage derselben in dem Clip zueinander geöffnet angeordnet sein. Damit können die Bögen einen linsenartigen, ellipsoiden oder kreisartigen Zwischenraum einschließen. Zweckmäßig, insbesondere bei der Teilkreisbogenform, können die Haltebereiche und/oder die Magnetbereiche der Halteelemente über einen kreisförmigen Weg relativ zueinander gegeneinander und/oder aneinander vorbei bewegbar in dem Clip angeordnet sein. Hierbei können die teilkreisförmigen Halteelemente so zueinander positioniert sein, dass sie zusammen mit dem kreisförmigen Weg einen Kreis beschreiben.

Mittels der Magnetanordnung kann eine magnetische Federung oder magnetische Feder in den Clip integriert werden, die die erforderliche Federkraft zur funktionsgerechten form- und/oder kraftschlüssigen Lagefixierung des Gegenstandes, wie Festklemmen, Festhalten, Festklemmen, Einklemmen, Umgreifen, Umschließen oder Eingreifen in eine Öffnung oder Nut des Gegenstandes, erzeugt. Hierbei ist es unerheblich, ob der Clip den Gegenstand, wie zum Beispiel einen Notizzettel, lagefixiert oder ob der Clip an dem Gegenstand, wie zum Beispiel an einer Ablage, lagefixiert wird.

Ferner ist die magnetische Federkraft im Wesentlichen von einer Magnetisierung der die Federkraft erzeugenden Magneten und deren Positionierung abhängig, welches in der Regel auch in einer Massenproduktion leichter als bei einem Clip mit einer bestimmten mechanischen Federkraft definiert herzustellen ist. Eine Erhöhung der magnetischen Federkraft kann beispielsweise konstruktiv einfach unter Einbau von Magneten stärkerer Magnetisierung und/oder aus einem anderen Magnetwerkstoff erzielt werden, die aber dieselben geometrischen Abmessungen aufweisen können.

Da, wie weiter unten genauer beschrieben, eine derartige magnetische Federkraft über einander abstoßende Magnetkräfte eines Magnetfeldes erfolgen kann, das in einem Magnetspalt aufgebaut sein kann, kann eine Kraftübertragung auf die Halteelemente berührungslos und somit in Wesentlichen verlustfrei erfolgen. Dies trägt zur Erzeugung einer definierten Federkraft bei. Zudem kann dank der berührungslosen Kraftübertragung ein mechanisch "weicheres", d.h. über einen Federweg kontinuierliches Einbringen der Federkraft in den Gegenstand erfolgen, wodurch der Gegenstand entsprechend gering belastet wird.

Die Magnetanordhung kann zusammenwirkende Magnetbereiche umfassen. Die Magnetbereiche können jeweils einen Magneten mit einer magnetisch wirksamen Wirkseite aufweisen. Somit kann zwischen den Wirkseiten ein Magnetfeld zur Erzeugung der Federkraft herrschen. Die Halteelemente können jeweils einen Magnetbereich umfassen, der bezüglich einer als Wirkfläche ausgebildeten Seitenfläche des Halteelementes magnetwirksam ist.

Vorzugsweise ist zumindest eines der Halteelemente mit dem Magnetbereich relativ bewegbar zu einem Gehäuse oder Gestell des Clips angeordnet. Das Gehäuse kann einen weiteren Magnetbereich mit einem Magneten umfassen, wobei die Magnete so zueinander angeordnet sein können, dass sie ein Magnetfeld mit abstoßenden Magnetkräften aufweisen und hierüber die magnetische Federkraft erzeugbar ist, mittels derer das Halteelement gegen einen Haltebereich am Gehäuse zum Einklemmen und Halten des Gegenstandes führbar sind. Hierzu kann das Gehäuse selbst als Halteelement mit dem Haltebereich angesehen werden. Somit kann eine auf den und mittels des Magneten wirkende Magnetkraft unmittelbar in das zugeordnete Halteelement eingeleitet werden und als magnetische Federkraft auf den Haltebereich bzw. die Haltebereiche wirken.

Die relative Lage von Haltebereich und Magnetbereich in einem Halteelement kann unterschiedlich konzipiert sein, zweckmäßigerweise abhängig von den gewünschten Kräften der Halteelemente im Haltebereich sowie der erzeugbaren magnetischen Federkraft. Der Haltebereich kann den Magnetbereich oder der Magnetbereich kann den Haltebereich umfassen. Haltebereich und Magnetbereich können auch aneinander angrenzend angeordnet sein oder sich überlappen. In diesen Fällen ist eine geringe Hebelwirkung zur Kraftübertragung zu erwarten. Vorzugsweise ist der Magnetbereich eines Halteelementes entfernt zu dem Haltebereich angeordnet. Der Magnetbereich kann in einem ersten Endbereich des Halteelementes angeordnet sein. Der Haltebereich kann in einem vorzugsweise dem ersten Endbereich entgegengesetzt angeordneten zweiten Endbereich des Halteelementes positioniert sein.

Vorzugsweise sind zwei paarige, d.h. zu einem Paar zusammengefasste, und zusammenwirkende Halteelemente vorgesehen. Diese können mittels ihrer Wirkflächen einen Magnetspalt begrenzen. Die Halteelemente können bezüglich ihrer Wirkflächen relativ zueinander bewegbar sein. Somit kann über die Bewegung der Halteelemente die Begrenzung des Magnetspaltes verändert werden. Der Magnetspalt kann über die relative Bewegung der Halteelemente insbesondere bezüglich seiner Magnetspaltbreite, d.h. in der Distanz der ihn begrenzenden Wirkflächen, veränderbar sein. Bezüglich der wirkenden Kräfte können über das in dem Magnetspalt herrschende Magnetfeld Federkräfte in die Halteelemente eingeleitet werden, die aufgrund der beweglichen Anordnung der Halteelemente in dem Clip eine Relativbewegung der Halteelemente bewirken können. Vorzugsweise sind die Halteelemente hierbei bezüglich ihrer Wirkflächen relativ zueinander bewegbar. Die Halteelemente können bezüglich ihrer Wirkflächen mit einer Hauptbewegungskomponente in Richtung ihrer Flächennormalen oder senkrecht zur Wirkfläche bewegbar angeordnet sein. Vorzugsweise erfolgt eine Änderung der Magnetspaltbreite dadurch, dass die Wirkflächen auf einem steten Weg, vorzugsweise auf einem bogenförmigen, insbesondere einem kreisbogenförmigen Weg, relativ zueinander bewegbar sind. Dieser Weg entspricht hier dann dem Federweg. Hierdurch kann der Clip vorgespannt werden. Mit einem Freigeben der Halteelemente bewegen sich dieselben unter Vergrößerung des Magnetspaltes mit ihren Haltebereichen zur gegenseitigen Anlage aufeinander zum funktionsgerechten Lagefixieren, d.h. Festklemmen oder Festhaltens, eines Gegenstandes zwischen den Haltebereichen. Dieser Weg entspricht in dieser Ausführungsform dem Federweg, der maximal der Magnetspaltbreite in der Halteposition entspricht. Der Magnetspalt kann zumindest in einer Position der Wirkflächen zueinander eben ausgebildet sein.

Konstruktiv vorteilhaft kann vorgesehen sein, dass zwei zu einem Paar zusammengefasste und zusammenwirkende Halteelemente mit jeweils einem Magnetbereich vorgesehen sind, wobei beide Halteelemente beweglich an dem Gehäuse oder Gestell angeordnet sind. Der Magnetbereich eines Halteelementes kann in unmittelbarer Wirkverbindung mit dem Haltebereich des anderen Halteelementes stehen.

Vorzugsweise weisen die Halteelemente eines Paares einen gleichen Aufbau mit insbesondere gleicher magnetischer Polarisierung bezüglich der Wirkfläche der Magnetbereiche und/oder gleicher Form auf. Dank der gleichen magnetischen Polarisierung bezüglich der Wirkflächen kann in dem von den Wirkflächen begrenzten Magnetspalt ein Magnetfeld mit abstoßenden Magnetkräften herrschen, wodurch die Halteelemente an den Wirkflächen ihrer Magnetbereiche abgestoßen oder voneinander weg beschleunigt werden. In der Halteposition können die Wirkflächen somit funktionsbedingt maximal beabstandet zueinander sein. Zugleich können die Haltebereiche in der Halteposition funktionsgerecht den Gegenstand einklemmen oder festhalten und somit minimal zueinander beabstandet angeordnet sein oder, ohne einzuklemmenden Gegenstand zwischen den Halteelementen, aneinander anliegen. Vorzugsweise sind die Haltebereiche austauschbar an den Halteelementen angeordnet. Die Haltebereiche können über eine Steckverbindung mit dem Halteelement verbunden sein.

Zum Öffnen der Halteelemente aus der Halteposition können die Halteteile gegen die Magnetkräfte des Magnetfeldes im Magnetspalt "vorgespannt" werden, wobei ein maximaler Öffnungsweg unter anderem von der Magnetspaltbreite in der Halteposition abhängt.

Die einzelne Magnetanordnung bzw. Magnete eines Magnetbereiches können eine magnetisch wirksame Wirkseite aufweisen, die magnetwirksam zu der Wirkfläche des ihnen zugeordneten Halteelementes bzw. dessen Magnetbereiches positioniert ist. Die Wirkseite kann somit der Wirkfläche des zugeordneten Magnetbereiches zugewandt sein. Vorzugsweise ist die Wirkfläche des Magnetbereiches parallel zu der Wirkseite des zugeordneten Magnetes oder der zugeordneten Magnete angeordnet. Bevorzugt bildet die Wirkseite des Magnetes oder der Magnete eines Halteelementes zumindest teilweise die Wirkfläche des zugeordneten Magnetbereiches.

Der Magnet bzw. die Magnete der Magnetanordnung können an sich bekannte Polanordnungen aufweisen. Der Dauermagnet kann einseitig lateral mit wenigstens je einem Polpaar magnetisiert sein. Vorzugsweise ist der Dauermagnet axial magnetisiert. Die Dauermagnete können axial einfach polarisiert oder axial beidseitig mehrpolig polarisiert sein.

Ein Magnetbereich kann auch zwei und mehr Magnete aufweisen, die zu einer Teilmagnetanordnung zusammengefasst sind, wobei die Teilmagnetanordnung die Wirkseite aufweisen kann. Vorzugsweise weist die Magnetanordnung pro Halteelement eine Wirkseite mit wenigstens zwei Magneten auf.

Die als Dauermagnete ausgebildeten Magnete können aus einem hartmagnetischen Werkstoff wie Bariumferrit-, Strontiumferrit- und/oder Seltenerdwerkstoff aufgebaut sein. Als möglicher hartmagnetischer Werkstoff kommt beispielsweise Samarium-Kobalt, Neodym-Eisen-Bor (NdFeB) oder martensitischen Stahl in Frage. Vorzugsweise sind die Dauermagnete anisotrop mit einer axialen Vorzugsmagnetisierrichtung ausgebildet. Die Magnete können als Sintermagnete ausgebildet sein.

Die Halteelemente können zumindest in ihrem Magnetbereich einen kreisförmigen Querschnitt aufweisen. Vorzugsweise bildet der Magnetbereich einen ersten Endbereich des Halteelementes und der Haltebereich einen zweiten, vorzugsweise dem ersten Endbereich entgegengesetzt angeordneten zweiten Endbereich. Der der Wirkfläche des Halteelementes zugeordnete Magnet weist vorzugsweise eine zylindrische oder hohlzylindrische Form auf, wobei der Magnet vorzugsweise stirnendseitig des Magnetbereiches so angeordnet ist, dass seine Zylinderachse mit der Mittellängsachse des Halteelementes zusammenfällt und seine Wirkseite die Wirkfläche des Magnetbereiches bildet.

Der Clip kann in einer Weiterbildung ein Gehäuse oder ein Gestell mit einer Führung für zumindest ein Halteelement aufweisen, wobei das zumindest eine Halteelement relativ beweglich zum Gehäuse angeordnet ist.

Die Führung kann in einer Ausführungsform des Clips einen Führungskanal für zumindest ein Halteelement aufweisen, mittels dessen das Halteelement über einen Führungsweg führbar ist. In dem Führungskanal kann das Halteelement mit einem Führungsabschnitt innenseitig verschieblich anliegen. Aus dem Führungskanal kann das Halteelement zumindest in der Halteposition zur Lagefixierung, insbesondere zum Halten, Fest und/oder Einklemmen, des Gegenstandes zumindest mit seinem Haltebereich herausragen.

Der Führungskanal kann einen an den Querschnitt der Halteelemente angepassten Querschnitt aufweisen. Der Querschnitt kann kreisförmig sein.

Vorzugsweise sind zwei zusammenwirkende Halteelemente, insbesondere die zu einem Paar zusammengefassten Halteelemente, mit ihren Magnetbereichen in dem Führungskanal angeordnet. Der Führungskanal kann ein oder mehrere Teilabschnitte umfassen. Diese können über den Führungsweg beabstandet zueinander angeordnet sein. Vorzugsweise ist der Führungskanal über seine Längserstreckung nicht unterbrochen. Die Halteelemente sind bevorzugt so in dem Führungskanal angeordnet, dass ihre den Magnetspalt begrenzenden Magnetbereiche in einer maximalen Offenposition der Halteelemente bezüglich der axialen Länge des Führungskanales etwa mittig aneinandergrenzen oder geringfügig beabstandet sind.

In Anpassung an Halteelemente mit einer teilkreisbogenartigen Form, kann der Führungskanal ebenfalls eine teilkreisartige Form aufweisen, wobei die Teilkreisbögen der Halteelemente in Einbaulage derselben in dem Führungskanal zueinander geöffnet angeordnet sind. Insbesondere bei einer Anordnung zweier Halteelemente kann die teilkreisartige Form des Führungskanales einen Mittelpunktswinkel von größer 180° aufweisen. Hiedurch können die Halteelemente gegen ein Herausfallen aus dem Führungskanal in demselben gehalten werden.

Das Gehäuse kann als gebogenes Hohlprofil, wie als Rohrabschnitt, mit einer als Führungskanal ausgebildeten Kammer ausgebildet sein. Hierdurch kann das Gehäuse von seinen Dimensionen her minimiert werden, welches den Vorteil hat, dass die Zugänglichkeit der Haltebereiche zur Lagefixierung des Gegenstandes entsprechend optimiert werden kann. Zur Stabilisierung können Querverstrebungen und/oder Versteifungsrippen vorgesehen sein. Alternativ kann das Gehäuse als Vollkörper mit eingearbeitetem Führungskanal ausgebildet sein. Hierdurch kann die Stabilität des Gehäuses insbesondere gegenüber einer Verwindungssteifigkeit gesteigert werden. Als Körperform kommen letztlich beliebige in Frage. Vorzugsweise und in Anpassung an den Führungskanal kann das Gehäuse als rotationssymmetrischer Körper, vorzugsweise als rotationssymmetrischer Teilkörper mit einem Rotationswinkel oder Mittelpunktswinkel entsprechend dem des Führungskanals ausgebildet sein. Hierbei kann das Gehäuse als Rotationsellipsoid, als Teilkreisscheibe oder als Kugelkalotte jeweils vorzugsweise mit einem Mittelpunktswinkel größer 120° ausgebildet sein. Der Führungskanal kann im Gehäuse zur Minimierung desselben radial möglichst außen angeordnet sein.

Das Gehäuse kann Gehäusehälften aufweisen, die in einer Trennungsebene aneinanderliegen, wobei der Führungskanal zweckmäßig in der Trennungsebene eingearbeitet ist. Hierzu kann der Führungskanal als Nut mit vorzugsweise kreisrundem Querschnitt in eine, vorzugsweise in beide Gehäusehälften, eingearbeitet sein. Vorzugsweise sind die Gehäusehälften spiegelsymmetrisch zueinander mit der Erstreckungsebene des Führungskanales als Spiegelsymmetrieebene und Trennungsebene ausgebildet. In diesem bevorzugten Gehäuseaufbau ist die Spiegelsymmetrieebene zugleich die Trennebene. Es können, die Clipherstellung vereinfachend, identische Gehäusehälften hergestellt werden, die nach Einlegen der Halteelemente an der Trennungsebene aneinander festgelegt werden können. In einer einfachen Montage des Clips können die Halteelemente bei geöffnetem Gehäuse in eine Gehäusehälfte eingesetzt werden. Anschließend kann die zweite Gehäusehälfte in der Trennungsebene an die erste Gehäusehälfte angesetzt werden und der Führungskanal mit dem Halteelement seitlich so geschlossen werden, dass die Halteelemente mit ihren Haltebereichen stirnseitig aus dem Führungskanal herausragen. Vorzugsweise sind die Gehäusehälften über eine Steckverbindung aneinander festlegbar.

In dem Führungskanal kann ein weiterer, zum Gehäuse stationärer Magnet mit zwei Wirkseiten vorgesehen sein, wobei jede Wirkseite einen Magnetspalt zusammen mit der Wirkfläche des Magnetbereiches und/oder der Wirkseite des Magneten oder der Magnetanordnung eines zugeordneten Halteelementes begrenzt. Somit können zwei Magnetspalten bezüglich des Führungsweges "hintereinander" angeordnet werden. Somit kann der Federweg, über den die Halteelemente relativ zueinander bewegbar sind, entsprechend der dann doppelten Magnetspaltbreite vergrößert werden. Somit wird eine größere Beabstandung der Haltebereiche zur Aufnahme des Gegenstandes ermöglicht. Die Magnetanordnung kann ähnlich mehrere Magnetspalten aufweisen, ,die bezüglich des Führungsweges oder eines Weges zur Beabstandung der Haltebereiche parallel zueinander angeordnet sind. Hierdurch kann insbesondere die Haltekraft zum Festhalten oder Festklemmen des Gegenstandes vergrößert werden. In Kombination der Möglichkeiten kann die Magnetanordnung bezüglich des Führungsweges parallel und hintereinander angeordnete Magnetspalte umfassen. Allgemein kann vorgesehen sein, dass die Magnetanordnung mindestens zwei Magnetspalten umfasst, die bezüglich eines Weges der Magnetbereiche und/oder der Haltebereiche relativ zueinander in oben beschriebener Weise parallel oder hintereinander geschaltet angeordnet sind. Somit kann über das Versehen mehrerer Magnetspalten der Weg und/oder die erzielbare Magnetkraft beeinflusst werden.

Alternativ kann zumindest ein Halteelement als Hebel ausgebildet sein, der über ein Schwenkgelenk schwenkbeweglich an dem Gehäuse angeordnet sein und mit seinem Haltebereich gegen einen anderen Haltebereich am Gehäuse verschwenkt werden kann. Hierbei ist das Schwenkgelenk Teil der Führung. Vorzugsweise sind zwei Halteelemente als Hebel ausgebildet, wobei diese als Paar zusammenwirken können. Sie können ebenfalls eine gleiche Form, eine gleiche Magnetisierung und/oder einen gleichen Aufbau aufweisen.

Die Halteelemente können an dem Gehäuse um zueinander vorzugsweise parallel beabstandete Schwenkachsen verschwenkbar angeordnet sein. Hierzu kann gestellartig lediglich ein längliches Bauteil, wie ein Balken, ein Träger, ein Rohr oder ein Zylinder, als Gehäuse vorgesehen sein, an dem vorzugsweise endseitig oder in einem Endabschnitt jeweils ein Schwenkgelenk zum Verschwenken der Halteelemente angeordnet ist. Das längliche Bauteil kann in seinen Endbereichen jeweils eine Öffnung aufweisen, durch die ein zugeordnetes Haltegelenk geführt und in der dieses Halteelement schwenkbeweglich gelagert ist. Somit wird ein besonders einfacher Aufbau des Clips vorgeschlagen. Mittels der Positionierung des Schwenkpunktes am Halteelement können die Übersetzungen von Federkraft und Federweg gewünscht eingestellt werden.

Alternativ können beide als Hebel ausgebildete Halteelemente in einem Schwenkgelenk um eine vorzugsweise gemeinsame Schwenkachse verschwenkbar an dem Gehäuse oder Gestell angeordnet sein. Hierzu können die Halteelemente jeweils eine doppelbögige Form, vorzugsweise m-artige Form, mit einem mittleren Schenkel aufweisen, an dem sie überlappend zusammengeführt an einem gemeinsamen Schwenkgelenk schwenkbeweglich um eine gemeinsame Schwenkachse angeordnet sind. Auch hier sind die Doppelbögen der Halteelemente vorzugsweise zueinander geöffnet in dem Clip angeordnet. In dieser Ausführungsform des Clips kann das Gehäuse oder das Gestell auf das gemeinsame Schwenkgelenk reduziert werden, so dass der Clip lediglich aus den beiden Halteelementen und dem Schwenkgelenk aufgebaut sein kann.

Der Clip kann spiegelsymmetrisch mit einer ersten Spiegelsymmetrieebene senkrecht zu der Federkraft in der Halteposition, einer zweiten Spiegelsymmetrieebene in Erstreckungsebene der Halteelemente und/oder einer dritten Spiegelsymmetrieebene senkrecht zur ersten und zur zweiten Spiegelsymmetrieebene aufgebaut sein.

Ob die dritte Spiegelsymmetrieebene des Clips allein von der Form verwirklicht werden kann, hängt im Wesentlichen von der zweckmäßigen Gestaltung der Haltebereiche ab. Diese müssten hierzu von der Form her gleich den Magnetbereichen sein. Es ist jedoch vorteilhaft, unterschiedliche Haltemöglichkeiten beim Clip bereitzustellen, d.h. je nach Anforderung, ob der Gegenstand flächig oder mehr punktuell festgeklemmt oder - gehalten werden kann und/oder ob der Gegenstand zur Beispiel seitlich zwischen die Haltebereiche zweier zusammenwirkender Halteelemente geschoben werden soll. Bei zwei zusammenwirkenden Haltebereichen können sich diese in der Form unterscheiden.

Die Haltebereiche können beispielsweise eine runde Hakenform mit einer radial äußeren Seitenfläche als Haltefläche für den Gegenstand aufweisen, wobei Halteflächen gegeneinander bewegbar sind und zur Anlage an den Gegenstand ausgelegt sind. Diese Ausführungsform der Haltebereiche ermöglicht ein seitliches Zwischenschieben eines Gegenstandes zwischen die Halteflächen der Halteelemente. Alternativ können die Haltebereiche jeweils ein sich konisch verjüngendes stirnseitiges Ende mit einer Stirnfläche als Haltefläche für den Gegenstand aufweisen.

Die Haltefläche kann zum Beispiel als Fläche zur einklemmenden Anlage an den Gegenstand definiert werden. Da der Clip ebenfalls geeignet ist, Gegenstände beispielsweise mittels Umgreifen seiner Halteelemente zu lagefixieren, kommen in diesem Anwendungsfall des Clips radial innen liegende Bereiche seiner Halteelemente als Halteflächen zum Einsatz. Somit wird die Haltefläche an sich auch durch den jeweiligen Anwendungsfall des Clips definiert, wobei die einander zugeordneten Halteflächen infolge der Relativbewegung der Halteelemente zur Lagefixierung des Gegenstandes mittels der Magnetanordnung relativ zueinander bzw. gegeneinander bewegbar sind.

Vorzugsweise sind das Gehäuse, das Gestell und/oder die

Halteelemente bis auf die Magnete aus spritzgegossenem Kunststoff, wobei die Magnete an den zugehörigen Halteelementen festgelegt, insbesondere festgeklebt sind. Die Halteelemente können auch aus vorzugsweise ferromagnetischem Werkstoff sein. Hierzu kann ein zugehöriger Magnet über eine magnetische Haftungskraft an dem ferromagnetischen Halteelement festgelegt werden.

Die vorliegende Erfindung wird im Folgenden anhand mehrerer in einer Zeichnung dargestellten Ausführungsformen näher erläutert. In der Zeichnung zeigen:
- Fig. 1a: eine Schnittansicht einer ersten Ausführungsform eines Clips,
- Fig. 1b: eine Seitenansicht senkrecht zur Schnittansicht gemäß Figur 1a mit der Ausführungsform des Clips gemäß Figur 1a,
- Fig. 2a: eine Schnittansicht einer zweiten Ausführungsform des Clips,
- Fig. 2b: eine Seitenansicht senkrecht zur Schnittansicht gemäß Figur 2a mit der Ausführungsform des Clips gemäß Figur 2a,
- Fig. 3a: eine Schnittansicht einer dritten Ausführungsform des Clips,
- Fig. 3b: eine Seitenansicht senkrecht zur Schnittansicht gemäß Figur 3a mit der Ausführungsform des Clips gemäß Figur 3a,
- Fig. 4a: eine Schnittansicht einer vierten Ausführungsform des Clips,
- Fig. 4b: eine Seitenansicht senkrecht zur Schnittansicht gemäß Figur 4a mit der Ausführungsform des Clips gemäß Figur 4a,
- Fig. 5a: eine Seitenansicht einer fünften Ausführungsform des Clips,

- Fig. 5b: eine Seitenansicht senkrecht zur Seitenansicht gemäß Figur 5a mit der Ausführungsform des Clips gemäß Figur 5a,
- Fig. 6a: eine Seitenansicht einer sechsten Ausführungsform des Clips,
- Fig. 6b: eine Seitenansicht senkrecht zur Schnittansicht gemäß Figur 6a mit der Ausführungsform des Clips gemäß Figur 6a,

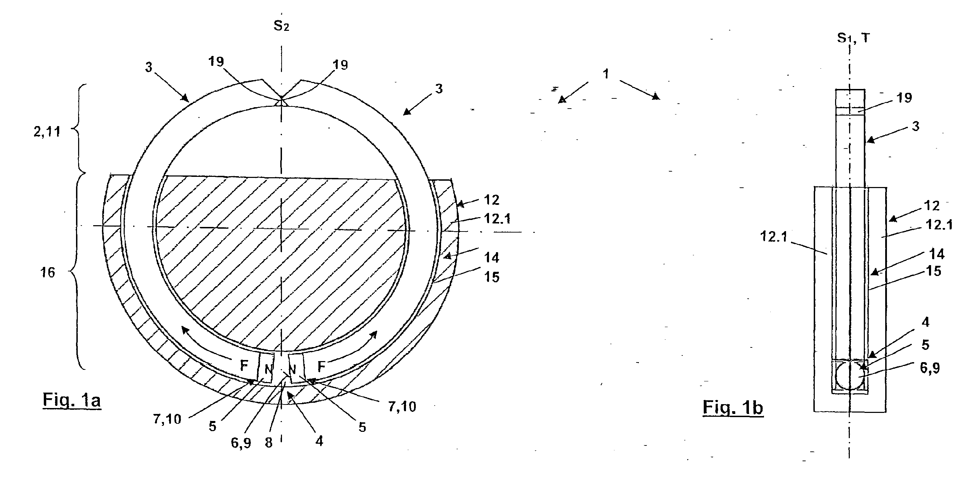

In den Figuren 1 bis 6 werden sechs Ausführungsformen eines Clips 1 mit zwei jeweils einen Haltebereich 2 aufweisenden Halteelementen 3 zur Lagefixierung, hier zum Festklemmen oder Festhalten, eines, hier nicht gezeigten Gegenstandes in verschiedenen Ansichten gezeigt. Die beiden Halteelemente 3 wirken als Paar zusammen, wobei die Halteelemente 3 mit den Haltebereichen 2 unter form- und/oder kraftschlüssigen Anlage an Gegenstand in eine Halteposition hinein gegeneinander bewegbar. In sämtlichen Figuren ist der Clip 1 in der Halteposition gezeigt, in der die Haltebereiche 2 der Halteelemente 3 hier jedoch wegen des nicht in der Zeichnung zugefügten Gegenstandes aneinander anliegen. Erfindungsgemäß weist der Clip 1 eine Magnetanordnung 4 auf, die Magnete 5 mit einer magnetisch wirksamen Wirkseite 6 umfasst, mittels derer eine auf die Halteelemente 3 wirkende magnetische Federkraft F zur form- und/oder kraftschlüssigen Lagefixierung des hier nicht gezeigten Gegenstandes, wie Festklemmen, Festhalten, Festklemmen, Einklemmen, Umgreifen, Eingreifen in eine Öffnung oder Nut des Gegenstandes, erzeugbar ist.

Die Magnetanordnung 4 weist zur Erzeugung der magnetischen Federkraft F zusammenwirken Magnetbereiche 7 mit den Magneten 5, wobei die Magnetbereiche jeweils mindestens eine magnetisch wirksame Wirkfläche 8 umfassen. In beiden Halteelementen 3 ist jeweils ein Magnetbereich 6 integriert, wobei deren Wirkseite jeweils einen Magnetspalt 8 begrenzen. Die Magnetbereiche 7 sind in den hier gezeigten Ausführungsformen mit den Magneten 5 jeweils in einem hier als erster Endbereich 10 bezeichneten Endbereich der Halteelemente 3 so angeordnet, dass der jeweilige Magnet 5' mit seiner Wirkseite 6 den Magnetspalt 8 begrenzt. Dadurch fallen Wirkseite 6 des Magneten 5 mit der Wirkfläche 8 des Magnetbereiches 7 hier zusammen, wobei die Wirkseite 6 des Magneten 5 um einen Betrag senkrecht zur Federkraft f und in Ebene von Wirkseite 6 und Wirkfläche 8 beidseitig über die Wirkfläche 8 übersteht. Die Halteelemente 3 sind bezüglich ihrer Wirkflächen 9 und der Wirkseiten 6 der'in ihnen integrierten Magnete 5 relativ zueinander bewegbar in dem Clip 1 angeordnet.

Die Haltebereiche 2 der Halteelemente 3 sind im Prinzip jeweils entfernt zu den zugeordneten Magnetbereichen 7 in einem als zweiter Endbereich 11 bezeichneten Endbereich in dem zugehörigen Halteelement 3 angeordnet. Da der Clip 1 auch ausgelegt ist, einen Gegenstand zu umgreifen oder in eine Öffnung des Gegenstandes einzugreifen, kommt als Ort für den Haltebereich 2 alle Orte an den Halteelementen in Betracht, der mittels der Magnetanordnung 4 relativ zueinander bewegbar sind und die für eine Lagefixierung mittels Anlage an den Gegenstand oder Einklemmens des Gegenstandes geeignet sind. Hierbei ist es unerheblich, ob der Clip 1 den Gegen-stand lagefixiert oder ob der Clip an dem Gegenstand lagefixiert wird.

Die Magnete 5 sind pulvermetallurgische, kunststoffgebundene Dauermagnete mit Hartferrit auf der Basis von Barium und/oder Strontium als Magnetwerkstoff. Die Magnete 5 sind hier axial einfach polarisiert und so in dem Clip 1 angeordnet, dass ihre Wirkseiten 6 bezüglich des Magnetspaltes 8 eine gleiche magnetische Polarität aufweisen, wobei diese in der Zeichnung beispielgebend und schematisch angegeben ist.

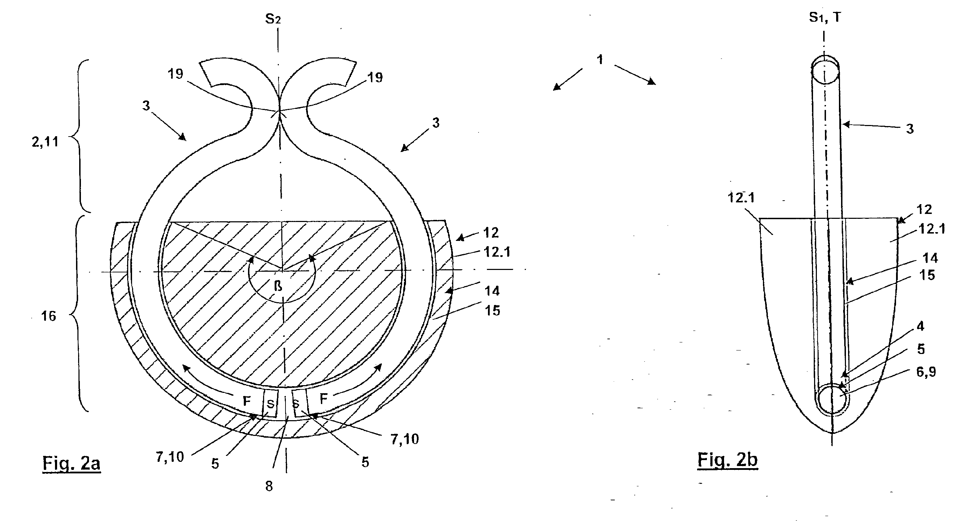

Durch gleiche Polarisierung der Wirkseiten bezüglich des Magnetspaltes 8 herrscht in demselben ein hier nicht eingezeichnetes Magnetfeld mit einander abstoßenden Magnetkräften. Mit Öffnung des Clips 1 aus seiner Halteposition in eine hier nicht gezeigte Offenposition der Halteelemente 3 entsteht zwischen den Haltebereichen 2 ein hier nicht gezeigter Haltespalt, in den hinein der Gegenstand geschoben werden kann. Mit der Öffnung werden die Wirkflächen 9 bzw. die Wirkseiten 6 gegeneinander bewegt und der Magnetspalt 8 gegen das im Magnetspalt 8 herrschende Magnetfeld verengt, wozu eine bestimmte Kraft bzw. Arbeit aufgebracht werden muss, die als Federenergie gespeichert ist. Die Halteelemente 3 werden gegeneinander vorgespannt. Mit Freiwerden der Halteelemente 3 drückt die Vorspannung die Halteelemente 3 unter Verbreiterung des Magnetspaltes 8 bezüglich der Wirkflächen 9 auseinander, so dass die endseitig gegenüberliegenden Haltebereiche 2 gegeneinander bewegt und zur gegenseitigen Anlage kommen oder, wenn eine Gegenstand in den Haltespalt eingeführt ist, gegen denselben anliegen. Es versteht sich, dass das Öffnen der Halteelemente 3 der Gegenstand zwischen die beiden Haltebereiche 2 gedrängt werden kann, wie es zum Beispiel bei der in Figur 2 gezeigten Ausführungsform leicht möglich ist.

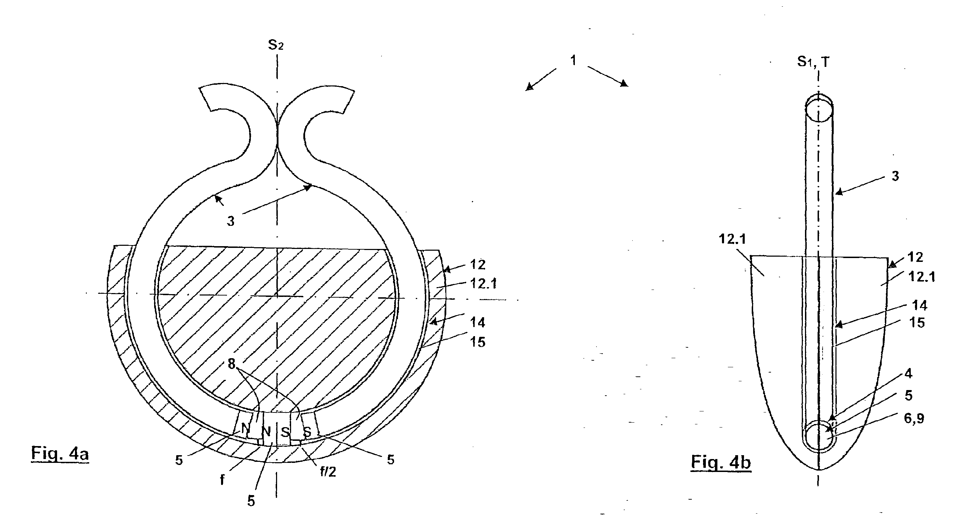

Während in den Ausführungsformen gemäß den Figuren 1 bis 3 und 5 bis 6 die Magnetanordnung 4 lediglich in den in den ersten Endbereich 10 angeordneten Magnetbereichen 2 jeweils einen Magneten 5 vorsieht, die mit ihren gleichpoligen Wirkseiten 6 einen Magnetspalt 8 begrenzen, ist in der Ausführungsform gemäß Figur 4 ein zusätzlicher Magnet 5 vorgesehen, Der Magnet 5 ist zwischen den Magnetbereichen 7 stationär zum Gehäuse 12 angeordnet, so dass zwei bezüglich der Federkraft hintereinander angeordnete Magnetspalten 8 entstehen, die jeweils von gleichpoligen Wirkseiten 6 der zugeordneten Magnete 5 bzw. jeweils von einer magnetischen Wirkflächen 9 des zugehörigen Magnetbereiches 7 und einer Wirkseite 6 des hier stationären Magneten 5 begrenzt werden. In beiden Fällen sind die den Magnetspalt 8 begrenzenden Wirkseiten 6 gleichpolig magnetisiert. Mittels dieser "Hintereinanderschaltung" von Magneten 5 mit zwischen liegenden Magnetspalten 8 wird der Federweg w sowie eine mögliche Federenergie infolge der hier zwei Magnetspalte 8 vergrößert, so dass auch entsprechend dickere Gegenstände mittels der Clips 1 eingeklemmt oder festgehalten werden können. Der zusätzliche, stationäre Magnet 5'weist einen Querschnitt gleich dem des Führungskanales auf. Zur Montage des Clips wird der stationäre Magnet 5 mittig in den geöffneten Führungskanal 15 einlegt und in demselben festgesetzt. Hierbei wird der Magnet 6 eingeklebt.

Die Halteelemente 3 weisen in den gezeigten Ausführungsformen eine im Wesentlichen einfach teilkreisbogenartige oder mehrfach teilkreisbogenartige Form auf. Die Teilkreisbögen der Halteelemente 3 sind in dem Clip 1 zueinander geöffnet angeordnet. Die Halteelemente 3 sind mit ihren Haltebereichen 2 und Magnetbereichen 7 jeweils über einen kreisförmigen Weg relativ gegeneinander bewegbar in dem Clip 1 angeordnet. Durch die teilskreisbogenartige Form wird eine mechanische Stabilität, insbesondere eine Knickfestigkeit, der Halteelemente beim Festklemmen oder Festhalten des Gegenstandes gesteigert.

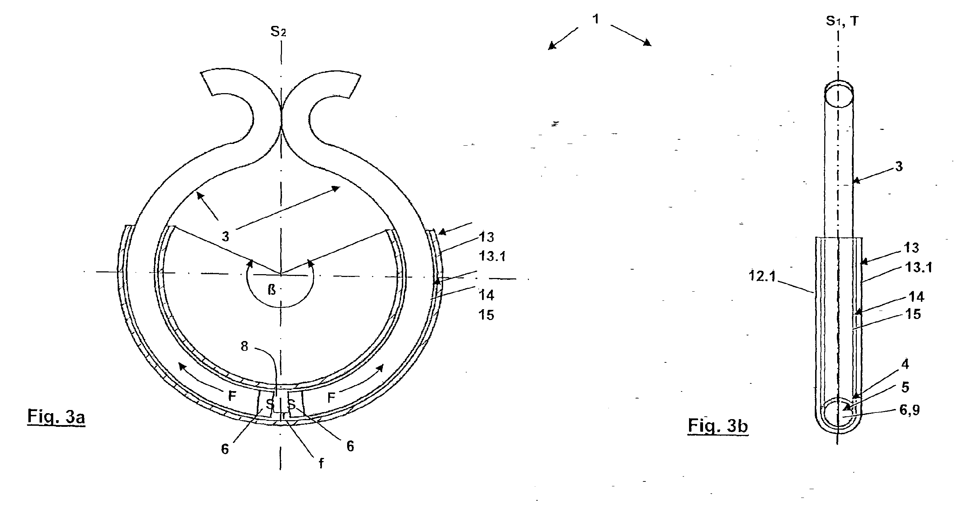

Der Clip 1 weist in den Ausführungsformen gemäß den Figuren 1, 2 und 4 ein Gehäuse 12 und in den Ausführungsformen gemäß den Figuren 3, 5 und 6 ein sehr einfaches Gestell 13 mit einer Führung 14 zur Führung der Halteelemente 3 über den hier kreisförmigen Weg auf.

Die Führung in den Ausführungsformen gemäß den Figuren 1 bis 4 umfasst einen hier kreisabschnittartigen Führungskanal 15, in dem die Halteelemente 3 mit einem Führungsabschnitt 16 und mit den Magnetbereichen 2 innenseitig verschieblich anliegen und aus welchem die Halteelemente 3 in der Halteposition zum Festklemmen oder Festhalten des Gegenstandes jeweils mit ihrem Haltebereich 2 herausragen. Somit sind die teilkreisartigen Halteelemente 3 leicht innerhalb des Führungskanales 15 auf dem kreisförmigen Weg verschiebbar. Die mittels der Magnetanordnung 4 unmittelbar in die Halteelemente 3 eingeleiteten Federkräfte F werden unter bestimmten Reibungsverlusten infolge der Verschiebung des Halteelementes 3 in dem Führungskanal über den kreisförmigen Verlauf der Halteelemente 3 unmittelbar in die Haltebereiche 7 eingeleitet.

Der Führungskanal 15 weist einen Mittelpunktswinkel ß von etwa 240° auf. Dadurch sind die Halteelemente 3, die bezüglich ihrer Haltebereiche 2 bzw. in ihrer Magnetbereiche 7 um maximal Magnetspaltbreite beabstandet sind, in dem Führungskanal 15 gegen ein unbeabsichtigtes Herausbewegen aus dem Führungskanal 15 führungssicher gelagert. Zur Minimierung des Gehäuses 12 ist der Führungskanal 15 radial möglichst weit zum umfänglichen Gehäuserand verschoben angeordnet.

Das Gehäuse 12 ist in der Ausführungsform des Clips 1 gemäß Figur 1 als Teilkreisscheibe und in den Ausführungsformen gemäß den Figuren 2 und 4 als Teil eines etwa rotationselliptoiden Körper ausgebildet. Das Gehäuse 12 besteht aus zwei Gehäusehälften 12.1, die in einer Trennungsebene T aneinander anliegen. In der Ausführungsform gemäß der Figur 3 ist ebenfalls ein kreisabschnittartiger Führungskanal 15 vorgesehen, wobei dieser durch zwei gebogene halbschalenartige Abschnitte 13.1 gebildet wird, die, an ihrer Trennungsebene T zusammengesetzt, ein rohrabschnittsartiges Gestell 13 bilden.

Das Gehäuse 12 bzw. das Gestell 13 sowie der Clip 1 an sich sind symmetrisch mit einer ersten Spiegelsymmetrieebene S₁, die gleich der Trennungsebene T ist und senkecht zum Magnetspalt 8 verläuft, und einer zweiten

Spiegelsymmetrieebene S₂ senkrecht zur Trennungsebene T, welche in der Ebene des Magnetspaltes 8 verläuft. Somit weisen beide Gehäusehälften 12.1 einen identischen Aufbau auf.

Nicht explizit dargestellt in den Figuren ist die Verbindungsform, mittels der die Gehäusehälften 12.1 miteinander verbunden werden. Dies erfolgt in den hier gezeigten Ausführungsformen mittels einer Steckverbindung. Diese kann mittels eines Werkzeuges gelöst werden, so dass die Halteelemente 3 nach Clipsmontage zum Beispiel gegen Halteelemente 3 mit stärkeren Magneten 5 und/oder anders gestalteten Haltebereichen 2 ausgetauscht werden können.

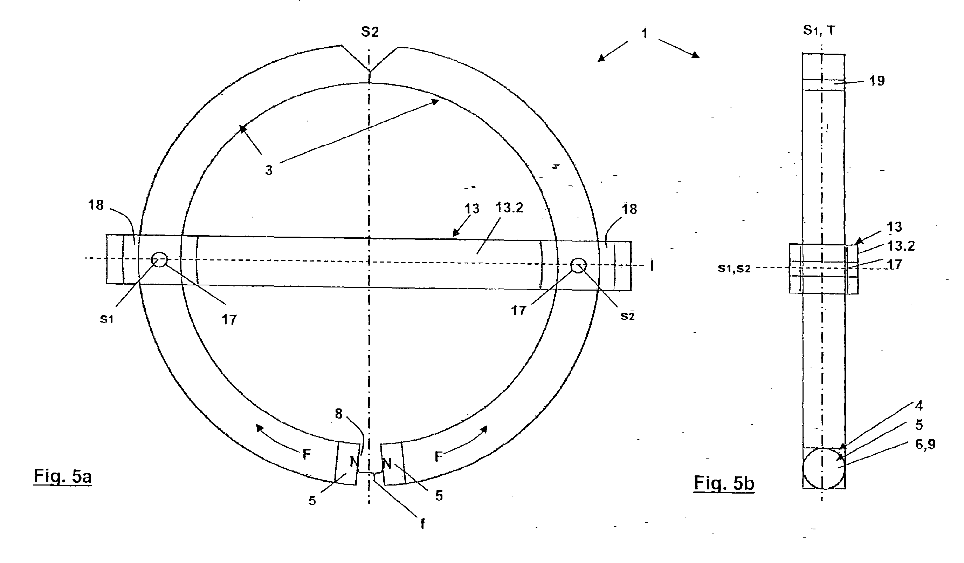

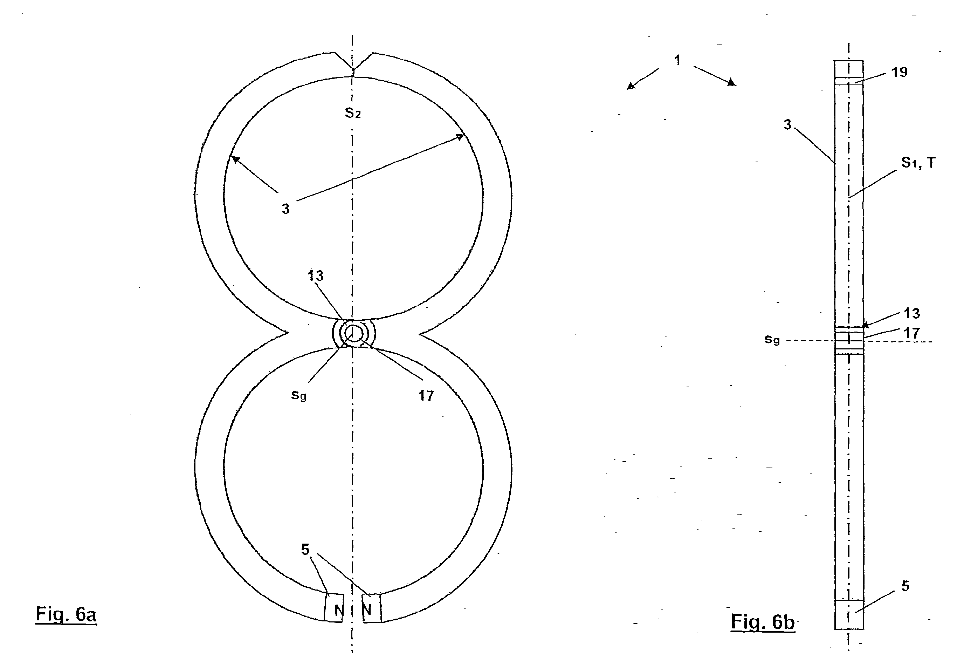

In den Ausführungsformen gemäß den Figuren 5 und 6 sind die die Halteelemente 3 als Hebel ausgebildet. Gemäß Figur 5 sind die Halteelemente 3, jeweils in einem Schwenkgelenk 17 als Teil der Führung 14 um eine Schwenkachse S₁ bzw. S₂ verschwenkbar an dem Gestell 13 angelagert und in ihrer Relativbewegung geführt, wobei die Schwenkachsen S₁, S₂ parallel beabstandet und senkrecht zur Längsachse 1 eines das Gestell 13 bildenden Stabes 13.2 angeordnet sind. Der Stab 13.2 weist hierzu endseitig Öffnungen 18 zum Durchführen der Halteelemente 3 auf. Die Halteelemente 3 sind in den Ausführungsformen gemäß den Figuren 5 und 6 jeweils mittig über ihre Längserstreckung verschwenkbar angelagert, so dass die Hebelteile (Lastarm-Kraftarm) gleich groß sind und keine wesentliche Änderung der Federkraft F über den Weg zu ihrer Einleitung in die Haltebereiche 2 erfolgt.

In der sechsten Ausführungsform des Clips 1 gemäß Figur 6 weisen die Halteelemente 3 jeweils eine doppelbögige Form mit zwei aneinander gereihten, etwa halbkreisartigen Bögen 19 und somit eine m-artige Form auf, die mittig zu einem gemeinsamen mittleren Schenkel 19.1 und endseitig jeweils in einem freien Schenkel 19.2 zusammenlaufen. Die Halteelemente 3 sind auch hier so angeordnet, dass sich die Halbkreisbögen 19 zueinander öffnen. Die mittleren Schenkel 19.1 der beiden Halteelemente 3 überlappen sich und sind über ein gemeinsames Schwenkgelenk 17 um eine gemeinsame Schwenkachse S_{g} verschwenkbar verbunden. Somit reduziert sich das Gestell 13 praktisch auf das Schwenkgelenk 17.

Die einzelnen Ausführungsformen des Clips 1 weisen beispielgebend zwei unterschiedliche Formen hinsichtlich der Haltebereiche 2 auf. In den Ausführungsformen gemäß Figuren 1, 5 und 6 weisen die Haltebereiche 2 jeweils ein sich konisch verjüngendes stirnseitiges Ende mit einer Stirnfläche als Haltefläche 19 für den Gegenstand auf, wobei die Haltebereiche mit ihren Halteflächen 19 über eine Änderung des Magnetspaltes 8 relativ zueinander bewegbar sind. Da die hier stirnseitige Haltefläche 19 gegenüber dem Restquerschnitt konisch verjüngt ist, die der Druck infolge der Federkraft F entsprechend vergrößert. Damit kann eine stärke Verklammerung des Clips 1 mit dem Gegen stand erfolgen. In den Ausführungsformen gemäß Figuren 2 bis 4 weisen die Haltebereiche 2 eine runde Hakenform mit einer radial äußeren Seitenfläche als Haltefläche 19 für den Gegenstand auf. Dank der Hakenform kann beispielsweise ein flacher Gegenstand wie ein Blatt bequem seitlich zwischen die Haltebereiche 2 geschoben werden, welcher hierdurch die Harteflächen 19 entsprechend gegen die Federkraft F beabstandet.

Die Haltefläche 19 ist hier, wie in den übrigen Ausführungsformen, als Fläche zur einklemmenden Anlage an den Gegenstand definiert. Da der Clip 1 ebenfalls geeignet ist, Gegenstände beispielsweise mittels Umgreifen seiner Halteelemente 3 zu lagefixieren, kommen in diesem Anwendungsfall des Clips radial innen liegende Bereiche seiner Halteelemente als Halteflächen zum Einsatz. Somit wird die Haltefläche an sich auch durch den jeweiligen Anwendungsfall des Clips 1 definiert.

In allen Ausführungsformen des Clips 1 sind die Halteelemente 3 eines Paares identisch aufbaut, welches ihre Herstellung und Lagerung entsprechend vereinfacht.

Wie allein aus der Anschauung ersichtlich, ist der Clip 1, wie sein Gehäuse 12 bzw. sein Gestell 13, symmetrisch aufgebaut, welches seine Herstellung vereinfacht und zugleich ein ansprechendes Design ermöglicht. Diese Symmetrie ist hier ebenfalls eine doppelte Spiegelsymmetrie mit der ersten Spiegelsymmetrieebene S₁ in Trennungsebene T des Gehäuses 12 bzw. in der Ebene, in der sich die Halteelemente 3 erstrecken, und der zweiten Spiegelsymmetrieebene S₁ senkrecht zur Trennungsebene T.

### Clip

**Bezugzeichenliste**
- 1: Clip
- 2: Haltebereich
- 3: Halteelement
- 4: Magnetanordnung
- 5: Magnet
- 6: Wirkseite
- 7: Magnetbereich
- 8: Magnetspalt
- 9: Wirkfläche
- 10: erster Endbereich
- 11: zweiter Endbereich
- 12: Gehäuse
- 12.1: Gehäusehälfte
- 13: Gestell
- 13.1: Abschnitt
- 13.2: Stab
- 14: Führung
- 15: Führungskanal
- 16: Führungsabschnitt
- 17: Schwenkgelenk
- 18: Öffnung
- 19: Haltefläche
- ß: Mittelpunktswinkel
- 1: Längsachse
- S₁: Schwenkachse
- S₂: Schwenkachse
- S_{g}: Schwenkachse
- S₁: erste Spiegelsymmetrieebene

- S₂: zweite Spiegelsymmetrieebene
- T: Trennebene
- F: Federkraft
- f: Federweg

## Patentansprüche

1. Clip mit jeweils einen Haltebereich aufweisenden Halteelementen, wobei die Halteelemente zur Lagefixierung eines Gegenstandes mit dem Haltebereich unter form- und/oder kraftschlüssigen Anlage an demselben in einer Halteposition relativ zueinander bewegbar sind, und mit einer Magnetanordnung (4), mittels derer eine auf die Halteelemente (3) wirkende magnetische Federkraft (F) zum Festhalten und/oder Festklemmen des Gegenstandes erzeugbar ist, **dadurch gekennzeichnet, dass** die Halteelemente (3) eine im Wesentlichen einfach bogenartige oder mehrfach bogenartige Form aufweisen, wobei die Bögen der Halteelemente (3) in Einbaulage derselben in dem Clip (1) zueinander geöffnet angeordnet sind und die Halteelemente (3) über einen kreisförmigen Weg relativ zueinander bewegbar in dem Clip (1) angeordnet sind.

2. Clip nach Anspruch 1, **dadurch**
**gekennzeichnet, dass** die Magnetanordnung (4) zusammenwirkende Magnetbereiche (7) umfasst, die jeweils einen Magneten (5) mit einer magnetisch wirksamen Wirkseite (6) aufweisen, und dass die Halteelemente (3) jeweils einen Magnetbereich (7) umfassen, der bezüglich einer als Wirkfläche (9) ausgebildeten Seitenfläche des Halteelementes (3) magnetwirksam ist.

3. Clip nach Anspruch 2, **dadurch**
**gekennzeichnet, dass** die Magnetbereiche (7) entfernt zu den Haltebereichen (2) in den Halteelementen (3) angeordnet sind.

4. Clip nach einem der Ansprüche 1 bis 3, **dadurch gekennzeichnet, dass** zwei paarig zusammenwirkende Halteelemente (3) vorgesehen sind, die mittels ihrer Wirkflächen (9) einen Magnetspalt (8) begrenzen und bezüglich ihrer Wirkflächen (9) relativ zueinander bewegbar sind.

5. Clip nach Anspruch 4, **dadurch**
**gekennzeichnet, dass** die paarig zusammenwirkenden Halteelemente (3) einen gleichen Aufbau mit gleicher magnetischer Polarisierung und/oder
gleicher Form aufweisen.

6. Clip nach einem der Ansprüche 2 bis 5, **dadurch gekennzeichnet, dass** der Magnetbereich (7) eines Halteelementes (3) endseitig desselben mit endstirnseitig angeordneter Wirkfläche (9) positioniert ist und die Wirkfläche (9) zumindest teilweise durch die Wirkseite (6) des Magneten gebildet wird.

7. Clip nach Anspruch 6, **dadurch**
**gekennzeichnet, dass** die Magnete (5) als Dauermagnete ausgebildet sind, die axial einfach polarisiert oder axial beidseitig mehrpolig polarisiert sind und jeweils eine magnetische Wirkseite (6) aufweisen, die magnetwirksam zu der Wirkfläche (9) des zugeordneten Halteelementes (3) positioniert ist und/oder die Wirkfläche (9) des zugeordneten Halteelementes (3) bildet.

8. Clip nach einem der Ansprüche 1 bis 7, **dadurch gekennzeichnet, dass** er ein Gehäuse (12) oder Gestell (13) mit einer Führung (14) für zumindest ein Halteelement (3) aufweist, wobei das zumindest eine Halteelement (3) relativ beweglich zum Gehäuse angeordnet ist.

9. Clip nach Anspruch 8, **dadurch**
**gekennzeichnet, dass** die Führung (14) einen Führungskanal (15) aufweist, in welchem die Halteelemente (3) mit einem Führungsabschnitt (16) innenseitig verschieblich anliegen und aus welchem die Halteelemente (3) zumindest in der Halteposition zum Festhalten oder Festklemmen des Gegenstandes jeweils zumindest mit ihrem Haltebereich (2) herausragen.

10. Clip nach Anspruch 9, **dadurch gekennzeichnet, dass** die Magnetbereiche (7) der Halteelemente (3) in dem Führungskanal (15) angeordnet sind und der Führungskanal (15) eine teilkreisartige Form mit einem Mittelpunktswinkel (ß) größer 180° aufweist.

11. Clip nach Anspruch 9 oder 10, **dadurch gekennzeichnet, dass** das Gehäuse (12) als Hohlprofil mit einer als Führungskanal (15) ausgebildeter Kammer oder als Scheibe, vorzugsweise Teilkreisscheibe, mit eingearbeitetem Führungskanal (15) ausgebildet ist.

12. Clip nach einem der Ansprüche 1 bis 11, **dadurch gekennzeichnet, dass** die Halteelemente (3) als Hebel ausgebildet sind, die an dem Gehäuse (12) oder Gestell (13) um zueinander parallele Schwenkachsen (S₁, S₂) oder um eine gemeinsame Schwenkachse (S_{g}) in die Halteposition hinein relativ zueinander gegeneinander und/oder aneinander vorbei verschwenkbar angeordnet sind.

13. Clip nach einem der Ansprüche 1 bis 12, **dadurch gekennzeichnet, dass** die Haltebereiche (2) eine runde Hakenform mit einer radial äußeren Seitenfläche als Haltefläche (19) für den Gegenstand oder ein sich konisch verjüngendes stirnseitiges Ende mit einer Stirnfläche als Haltefläche (19) für den Gegenstand aufweisen, wobei die Haltebereiche (7) mit ihren Halteflächen (19) gegeneinander und/oder aneinander vorbei bewegbar sind.

14. Clip nach einem der Ansprüche 1 bis 13, **dadurch gekennzeichnet, dass** er spiegelsymmetrisch mit einer ersten Spiegelsymmetrieebene (S₁) in Erstreckungsebene der Halteelemente (3), einer zweiten Spiegelsymmetrieebene (S₂) senkrecht zu der Federkraft (F) in seiner Halteposition und/oder einer dritten Spiegelsymmetrieebene senkrecht zur ersten Spiegelsymmetrieebene (S₁) und zur zweiten Spiegelsymmetrieebene (S₂) aufgebaut ist.

## Claims

1. Clip with retaining elements each displaying a retaining area, where the retaining elements can be moved relative to each other for fixing an object in place with the retaining area by positive and/or non-positive contact with said retaining area in a retaining position, and with a magnet arrangement (4), by means of which a magnetic spring force (F), acting on the retaining elements (3), can be generated to hold and/or clamp the object in place, **characterised in that** the retaining elements (3) display an essentially singly arc-shaped or multiply arc-shaped form, where, in installed position in the clip (1), the arcs of the retaining elements (3) are open towards each other, and the retaining elements (3) are arranged in the clip (1) in a manner permitting movement relative to each other over a circular path.

2. Clip according to Claim 1, **characterised in that** the magnet arrangement (4) comprises interacting magnetic areas (7) that each display a magnet (5) with a magnetically active side (6), and **in that** the retaining elements (3) each encompass a magnetic area (7) that has a magnetic effect in relation to a side face of the retaining element (3) designed as an active face (9).

3. Clip according to Claim 2, **characterised in that** the magnetic areas (7) are located in a remote position relative to the retaining areas (2) in the retaining elements (3).

4. Clip according to one of Claims 1 to 3, **characterised in that** two retaining elements (3) are provided that interact as a pair, delimit a magnet gap (8) by means of their active faces (9), and whose active faces (9) are capable of movement relative to each other.

5. Clip according to Claim 4, **characterised in that** the retaining elements (3) interacting as a pair display the same structure with the same magnetic polarisation and/or the same form.

6. Clip according to one of Claims 2 to 5, **characterised in that** the magnetic area (7) of a retaining element (3) is positioned at the end thereof, with an active face (9) located on the end face, and the active face (9) is at least partly formed by the active side (6) of the magnet.

7. Clip according to Claim 6, **characterised in that** the magnets (5) are designed as permanent magnets that are polarised in unipolar fashion in the axial direction, or bilaterally polarised in multipolar fashion in the axial direction, and each display a magnetically active side (6) that is positioned in magnetically effective fashion relative to the active face (9) of the associated retaining element (3) and/or forms the active face (9) of the associated retaining element (3).

8. Clip according to one of Claims 1 to 7, **characterised in that** it displays a housing (12) or a frame (13) with a guide (14) for at least one retaining element (3), where the at least one retaining element (3) is arranged in a manner permitting movement relative to the housing.

9. Clip according to Claim 8, **characterised in that** the guide (14) displays a guide channel (15), in which the inner side of a guided section (16) of the retaining elements (3) lies in sliding fashion, and from which at least the retaining area (2) of each retaining element (3) projects, at least in the retaining position for holding or clamping the object in place.

10. Clip according to Claim 9, **characterised in that** the magnetic areas (7) of the retaining elements (3) are located in the guide channel (15), and the guide channel (15) has the form of part of a circle with an angle at centre (β) greater than 180°.

11. Clip according to Claim 9 or 10, **characterised in that** the housing (12) is designed as a hollow section with a chamber designed as a guide channel (15), or as a disk, preferably a disk with the form of part of a circle, with incorporated guide channel (15).

12. Clip according to one of Claims 1 to 11, **characterised in that** the retaining elements (3) are designed as levers that are arranged on the housing (12) or the frame (13) in a manner permitting pivoting relative to each other, towards each other and/or past each other, into the retaining position, about pivoting axes that are parallel to each other (S₁, S₂), or about a common pivoting axis (S_{g}).

13. Clip according to one of Claims 1 to 12, **characterised in that** the retaining areas (2) display a round hook form with a radially outer side face as the retaining surface (19) for the object, or a conically tapering face end with an end face as the retaining surface (19) for the object, where the retaining areas (2) and their retaining surfaces (19) can be moved towards each other and/or past each other.

14. Clip according to one of Claims 1 to 13, **characterised in that** it has a mirror-symmetrical structure, with a first plane of mirror symmetry (S₁) in the plane of extension of the retaining elements (3), a second plane of mirror symmetry (S₂) perpendicular to the spring force (F) in its retaining position and/or a third plane of mirror symmetry perpendicular to the first plane of mirror symmetry (S₁) and to the second plane of mirror symmetry (S₂).

## Revendications

1. Clip avec des éléments de support, chacun des éléments comportant une partie de support, lesdits éléments, pour fixer la position d'un objet, pouvant être mus, avec la partie de support, dans une position l'un relative à l'autre, en prenant appui sur la partie de support d'une façon positive et/ou par adhérence, et avec un arrangement d'aimants (4) par lequel une élasticité magnétique (F) peut être produite agissant sur les éléments de support (3) pour retenir et/ou serrer ledit objet, **caractérisé en ce que** les éléments de support (3) a une forme essentiellement d'arc simple ou d'arc multiple, les arcs des éléments de support dans ses positions installées dans le clip (1) étant ouverts l'un par rapport à l'autre, et les éléments de support (3) étant disposée dans le clip d'une façon mobile l'un par rapport à l'autre sur une course circulaire.

2. Clip selon la revendication 1, **caractérisé en ce que** l'arrangement d'aimants (4) comporte des parties magnétiques coopérants (7), chacune partie comportant un aimant (5) avec une face active magnétiquement effective (6), et **en ce que** chacun des éléments de support (3) comporte une partie magnétique (7) qui est magnétiquement effective par rapport à une face latérale des éléments de support (3) qui est agencée comme une surface active (9).

3. Clip selon la revendication 2, **caractérisé en ce que** les parties magnétiques (7) sont arrangées loin des parties de support (2) dans les éléments de support (3).

4. Clip selon l'une des revendications 1 à 3, **caractérisé en ce que** sont prévus deux éléments de support (3) coopérant par paires et limitant par ses surfaces actives (9) une fente magnétique (8) et étant mobile l'un par rapport à l'autre concernant ses surfaces actives (9).

5. Clip selon la revendication 4, **caractérisé en ce que** les éléments de support coopérant par paires (3) ont la même structure avec la même polarisation et/ou la même forme.

6. Clip selon l'une des revendications 2 à 5, **caractérisé en ce que** la partie magnétique (7) de l'un des éléments de support (3) est positionnée sur le côté d'extrémité dudit élément, avec la surface active (9) étant arrangée à l'extrémité frontale, et **en ce que** la surface active (9) est formée au moins partiellement par la face active (6) de l'aimant.

7. Clip selon la revendication 6, **caractérisé en ce que** les aimants (5) sont agencés sous la forme d'aimants permanents de polarisation axiale simple ou de polarisation axiale multipolaire aux deux côtés et comportent chacun une surface magnétique active (6) qui est positionnée d'une manière magnétiquement effective par rapport à la surface active (9) de l'élément de support (3) associé et/ou qui forme la surface active (9) de l'élément de support (3) associé.

8. Clip selon l'une des revendications 1 à 7, **caractérisé en ce qu'**il comporte une boîte (12) ou un châssis (13) avec un dispositif de guidage (14) pour au moins un élément de support (3), au moins l'un élément de supporte (3) étant arrangé d'une manière mobile par rapport à la boîte.

9. Clip selon la revendication 8, **caractérisé en ce que** le dispositif de guidage (14) comporte un canal de guidage (15), à la face interne duquel sont attenants d'une manière glissante les éléments de support (3) par une partie de guidage (16), et hors duquel font saillie les éléments de support (3) par au moins sa partie de supporte (2), au moins dans la position de support, pour supporter ou serrer l'objet.

10. Clip selon la revendication 9, **caractérisé en ce que** les parties magnétiques (7) des éléments de support (3) sont arrangées dans le canal de guidage (15) et **en ce que** le canal de guidage (15) a une forme d'un cercle partiel avec un angle au centre (β) supérieur à 180°.

11. Clip selon la revendication 9 ou 10, **caractérisé en ce que** la boîte (12) est agencée sous la forme d'un profilé creux avec une chambre agencée sous la forme d'un canal de guidage (15), ou sous la forme d'un disque, de préférence sous la forme d'un disque à cercle partiel avec un canal de guidage (15) intégré.

12. Clip selon l'une des revendications 1 à 11, **caractérisé en ce que** les éléments de support (3) sont agencés sous la forme de leviers arrangés à la boîte (12) ou au châssis (13) autour des axes de pivotement parallèles (S₁, S₂) ou autour d'un axe commun de pivotement (S_{g}) pour pivoter l'un par rapport à l'autre dans la position de support et/or pour passer l'un devant l'autre.

13. Clip selon l'une des revendications 1 à 12, **caractérisé en ce que** les parties de support (2) ont une forme circulaire de crochet avec une face latéral extérieur agencée comme surface de support (19) de l'objet ou une extrémité frontale se diminuant d'une façon conique, avec une face frontale formant la surface de support (19) de l'objet, les parties de support (2) avec ses surfaces de support (19) pouvant mouvoir l'une par rapport à l'autre ou passer l'une devant l'autre.

14. Clip selon l'une des revendications 1 à 13, **caractérisé en ce que** ledit clip est construit de manière symétrique par rapport à l'axe, avec un premier plan de symétrie (S₁) situé dans le plan de l'extension des éléments de support (3), avec un deuxième plan de symétrie (S₂) situé perpendiculairement à l'élasticité (F) dans sa position de support et/ou avec un troisième plan de symétrie situé perpendiculairement au premier plan de symétrie (S₁) et au deuxième plan de symétrie (S₂).
